# FASCICULE DE BREVET EUROPEEN

(11) **EP 2 366 238 B1**
(45) Date de publication et mention de la délivrance du brevet: **03.07.2019**
(21) Numéro de dépôt: 09795507.4
(22) Date de dépôt: 24.11.2009
(51) Int. Cl.: H04L 12/911, H04L 29/14, H04L 29/06

(54) **PROCEDE ET SYSTEME DE REGULATION DU TRAFIC DE REDEMARRAGE DANS UN RESEAU DE TELECOMMUNICATIONS**
VERFAHREN UND SYSTEM ZUR REGELUNG VON NEUSTARTVERKEHR IN EINEM TELEKOMMUNIKATIONSNETZWERK
METHOD AND SYSTEM FOR ADJUSTING RESTARTING TRAFFIC IN A TELECOMMUNICATIONS NETWORK

(30) Priorité: 26.11.2008 FR 0858019
(43) Date de publication de la demande: 21.09.2011
(73) Titulaire: Orange, 75015 Paris (FR)
(72) Inventeur: TUFFIN, Stéphane, F-22300 Rospez (FR)
(86) Numéro de dépôt international: PCT/FR2009/052272
(87) Numéro de publication internationale: WO 2010/061119

(56) Documents cités:
- EP-A- 1 528 818
- WO-A-2007/130922
- WO-A-2008/085010
- US-A1- 2008 031 258
- BOUCADAIR M ET AL: "Enhancing the Serviceability and the Availability of IMS-Based Multimedia Services: Avoiding Core Service Failures" NEXT GENERATION MOBILE APPLICATIONS, SERVICES AND TECHNOLOGIES, 2008. NGMAST '08. THE SECOND INTERNATIONAL CONFERENCE ON, IEEE, PISCATAWAY, NJ, USA, 16 septembre 2008 (2008-09-16), pages 444-449, XP031409697 ISBN: 978-0-7695-3333-9

## Description

La présente invention concerne les moyens mis en place dans un réseau de télécommunications en prévision d'une panne partielle ou globale du réseau. Elle concerne notamment (mais pas exclusivement) les réseaux, par exemple de type IP ("*Internet Protocol*")*,* aptes à mettre en oeuvre des protocoles évolués de contrôle de session tels que H.323 et SIP (*"Session Initiation Protocol*")*.*

Les réseaux IP permettent la diffusion de données conversationnelles ("Voix sur IP", "Partage de Contenu", "Présence", "Messagerie Instantanée", et ainsi de suite).

Comme expliqué dans l'encyclopédie en ligne "Wikipédia", le sigle "H.323 regroupe un ensemble de protocoles de communication de la voix, de l'image et de données sur IP". Ces protocoles ont été mis au point par l'UIT-T. Ces protocoles "peuvent être regroupés en trois catégories : la signalisation, la négociation de codec [codeur-décodeur], et le transport de l'information."

Le protocole SIP a été défini par l'IETF dans le document RFC 3261. Ce protocole permet l'établissement, la modification et la terminaison de sessions multimédia dans un réseau utilisant le protocole IP. Le protocole SIP permet également des procédures de notification d'événements et l'envoi d'informations en dehors du contexte d'une session. Il est largement utilisé pour des commandes de services de messagerie instantanée. Ainsi, dans un environnement SIP, il existe différents types de communications telles que des requêtes d'établissement de sessions et des requêtes échangées hors de tout dialogue.

Ces protocoles évolués de contrôle de session utilisent notamment des messages dits "de signalisation", qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

L'invention concerne notamment (mais pas exclusivement) les infrastructures de type IMS ("*IP Multimedia Subsystem"*)*.* L'IMS a été défini par les organismes de normalisation 3GPP ("*3rd Generation Partnership Project*") et TISPAN ("*Telecommunications and Internet Converged Services and Protocols for Advanced Networking*")*.* C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Elle gère aussi l'interaction de services. L'IMS permet actuellement d'accéder à des services de type téléphonie, visiophonie, présence et messagerie instantanée.

Lorsqu'un utilisateur souhaite bénéficier des services offerts par un réseau IP tel que ceux décrits ci-dessus, il émet vers le réseau des messages de signalisation pouvant inclure notamment divers types de requêtes.

Tout d'abord, l'utilisateur doit s'enregistrer sur le réseau. Lorsque le réseau est incapable de faire le lien entre cet enregistrement et un enregistrement précédent (par exemple suite à une panne réseau ou suite à un arrêt du terminal pendant une durée supérieure à une durée d'expiration prédéterminée), l'enregistrement est considéré comme étant un enregistrement initial. Après un enregistrement initial, l'utilisateur doit périodiquement (par exemple, toutes les heures) envoyer au réseau une requête pour confirmer qu'il souhaite maintenir son enregistrement ; on appellera "période de rafraîchissement d'enregistrement" cet intervalle temporel entre deux telles requêtes.

Par ailleurs, quand le réseau met en oeuvre le protocole SIP, les usagers peuvent, en envoyant une requête correspondante, souscrire à certains services. Il peut s'agir d'un service de notification d'événement ; par exemple, lorsque l'utilisateur dispose d'une boîte vocale sur le réseau, il peut demander à recevoir une notification de la part du réseau chaque fois qu'un message a été enregistré sur cette boîte vocale. Il peut également s'agir d'un service de notification de présence, et ainsi de suite. Après la requête de souscription initiale, le terminal doit périodiquement envoyer au réseau une requête pour renouveler sa souscription ; on appellera "période de rafraîchissement de souscription" cet intervalle temporel entre deux telles requêtes.

Les divers états du système terminal-réseau requérant un rafraîchissement périodique sont communément désignés par le terme anglais "*soft-states".*

Les normes en vigueur imposent aux terminaux de gérer des temporisateurs leur permettant d'envoyer ces requêtes de rafraîchissement (d'enregistrement ou de souscription) de manière automatique. Lorsqu'un utilisateur s'enregistre (qu'il s'agisse d'un enregistrement initial ou d'un rafraîchissement) sur le réseau à partir d'un terminal, le réseau indique au terminal la période de rafraîchissement d'enregistrement souhaitée par l'opérateur du réseau. Après s'être enregistré initialement, un terminal peut émettre une ou plusieurs souscriptions initiales (par exemple à une notification de dépôt de message, ou une notification de présence), soit automatiquement et juste après l'enregistrement initial, soit suite à une action de l'utilisateur sur l'interface du terminal ; pour chaque souscription (qu'il s'agisse d'une souscription initiale ou d'un rafraîchissement), le réseau indique au terminal la période de rafraîchissement souhaitée par les gestionnaires du réseau pour cette souscription.

Dans ce contexte, pendant le fonctionnement normal du réseau, ce dernier reçoit des requêtes d'enregistrement initial et de souscription initiale, et des requêtes de rafraîchissement d'enregistrement et de souscription, au fur et à mesure que les usagers du réseau se connectent puis renouvellent leur enregistrement et leurs souscriptions au bout des périodes de rafraîchissement respectives prévues. La capacité de traitement des noeuds du réseau est évidemment prévue pour faire face à la fréquence de réception de requêtes correspondante, notamment en fonction du nombre habituel d'usagers du réseau. Dans de nombreux cas, et en particulier dans le cas des réseaux et services dits "*always-on*"*,* le taux de reconnexion et donc le taux d'enregistrements initiaux et de souscriptions initiales en fonctionnement normal est particulièrement bas.

Mais des difficultés particulières se présentent alors en cas de panne partielle ou globale du réseau. En effet, suite à une panne, les terminaux n'ayant pas réussi à renouveler leurs enregistrements et souscriptions cherchent tous à effectuer un enregistrement initial suivi d'une ou plusieurs souscription initiales. Le rythme auquel les terminaux cherchent à effectuer un enregistrement initial dépend de la programmation des terminaux. Dans de nombreux cas, les terminaux appliquent une période de temporisation, qui est potentiellement (et habituellement) beaucoup plus courte que la période de rafraîchissement d'enregistrement, ce qui entraîne un rythme élevé de tentatives d'enregistrement. Dans d'autres cas, c'est une action de l'utilisateur sur l'interface du terminal qui déclenche la tentative d'enregistrement. On notera que dans tous les cas la durée de cette période de temporisation n'est pas indiquée par le réseau, puisque par hypothèse la partie du réseau nécessaire au traitement usuel de l'enregistrement est alors en panne ; cette période de temporisation est donc choisie par le terminal ou par l'utilisateur. Le réseau doit ainsi faire face à un afflux anormalement élevé de requêtes, et ce d'autant plus que la panne dure longtemps ; après redémarrage, le réseau se trouve alors congestionné et souvent incapable de traiter toutes ces requêtes. De plus, après qu'un vaste ensemble de requêtes d'enregistrement initial ont été satisfaites, le réseau devra faire face à un nouvel afflux de requêtes issus des mêmes terminaux au bout de la période de rafraîchissement d'enregistrement.

La demande PCT 2007/130922 au nom de la société AT&T Corp. divulgue un procédé pour contrôler le trafic de requêtes d'enregistrement sur un serveur dans un réseau de communications. Ce procédé comprend les étapes suivantes : bloquer tous les liens d'entrée vers le serveur à partir d'un port du réseau associé au trafic de requêtes d'enregistrement ; débloquer au moins un desdits liens d'entrée vers le serveur à partir de ce port du réseau, suite à la configuration du serveur pour traiter des demandes d'enregistrement ; et répéter l'étape de déblocage au cours du temps jusqu'à ce que tous les liens d'entrée à partir de ce port de réseau soient débloqués. De préférence, pour l'étape de déblocage, on détermine si le serveur est configuré pour traiter des demandes d'enregistrement à un taux conforme à une capacité mesurée du serveur. Autrement dit, après une panne du serveur, on débloque progressivement le trafic d'enregistrement vers ce serveur au fur et à mesure que ce serveur récupère progressivement ses capacités de traitement en termes de requêtes d'enregistrement.

Ainsi, dans l'état de l'art, lors du redémarrage du réseau, les terminaux envoient leurs requêtes d'enregistrement respectives de manière légèrement décalée les unes par rapport aux autres ; chaque noeud du réseau traite, en fonction de sa capacité (qui peut varier d'un noeud à l'autre), les premières requêtes qu'il reçoit. Ce faisant, le niveau de charge des noeuds du réseau augmente rapidement jusqu'à atteindre la surcharge. Dans ces conditions, un ou plusieurs noeuds du réseau n'arrivent plus à répondre à temps aux terminaux, qui considèrent alors que leur requête d'enregistrement a échoué. Les terminaux constatant qu'il n'a pas été répondu à leur requête attendent, avant de resoumettre une requête d'enregistrement, pendant une durée dépendant de leur programmation ; si la nouvelle requête d'enregistrement d'un terminal est elle aussi rejetée, celui-ci devra de nouveau attendre, avant de pouvoir resoumettre une nouvelle requête, une certaine durée dépendant de sa programmation, et ainsi de suite jusqu'à ce que tous les terminaux ayant subi la panne et souhaitant se reconnecter aient pu le faire.

On connaît divers algorithmes de temporisation destinés à être mis en oeuvre par un terminal qui a subi un échec lors d'une tentative d'enregistrement initial ou de rafraîchissement d'enregistrement.

Ainsi, les terminaux de type "LiveBox" commercialisés par France Télécom sont actuellement programmés pour tenter de s'enregistrer toutes les 4 minutes.

La proposition postée sur http://tools.ietf.org/html/draft-ietf-sip-outbound-16#section-4.5 définit un algorithme dans lequel la durée d'attente observée par le terminal dépend non seulement de la période de rafraîchissement d'enregistrement, mais également du nombre d'échecs d'enregistrement consécutifs (plus précisément, il est prévu que la période de temporisation double à chaque fois que le terminal subit un nouvel échec dans sa tentative de réenregistrement, à condition de ne pas dépasser la période de rafraîchissement d'enregistrement).

Or les procédés de gestion des pannes connus sont loin d'être optimaux en ce qui concerne la durée d'attente subie par les terminaux. En effet :
1) comme expliqué ci-dessus, ils reposent sur la programmation préalable des terminaux ; or les terminaux utilisés pour accéder aux services proposés par un opérateur réseau ne sont pas nécessairement programmés par l'opérateur concerné ;
2) la durée d'attente est déterminée en fonction de la nécessité de ne pas saturer le noeud ou lien du réseau de plus faible capacité, au cas où ce serait justement ce noeud/lien qui tomberait en panne ; mais dans le cas où la panne n'affecte qu'un seul noeud/lien du réseau, ce dernier aura généralement une capacité de traitement supérieure à la capacité minimale, et les terminaux connectés à ce noeud/lien auraient donc en théorie pu bénéficier d'une durée d'attente plus courte ;
3) la durée d'attente est déterminée en fonction d'une durée de panne standard ; par conséquent, les usagers subissent une période d'attente excessive dans le cas où la panne est relativement courte ; et
4) il n'est pas prévu de distinguer entre les différents types de requêtes (enregistrement, souscription à une notification d'événement, souscription à une notification de présence, et ainsi de suite) ; par conséquent, le risque de congestion est évalué en fonction de l'ensemble des requêtes dont on prévoit qu'elles seront émises suite à un redémarrage ; or il est moins prioritaire pour les gestionnaires du réseau de satisfaire les requêtes de souscription que de permettre à tous les usagers qui le souhaitent de pouvoir s'enregistrer ; la durée d'attente avant que l'enregistrement initial ne réussisse est donc plus longue que si l'on attribuait des durées d'attente différentes à chaque type de requête en fonction d'un degré de priorité respectif.

Ainsi, le document intitulé "SIP : Session Initiation Protocol" de J. Rosenberg et al. (norme RFC 3261 de l'IETF, juin 2002) propose une procédure, dite de "*Retry-After*"*,* dans laquelle un serveur de services qui a constaté qu'il est surchargé répond aux clients qui lui envoient une requête de service, par un message indiquant le rejet de cette requête et enjoignant à ces clients d'envoyer une nouvelle requête après une durée d'attente standard. Mais cette procédure de "*Retry-After*" ne supprime pas le phénomène de congestion décrit ci-dessus : elle ne fait que le reporter à une date ultérieure. De plus, comme mentionné dans l'article de M. Boucadair, P. Morand, L. Borges et M. Tomsu intitulé "Enhancing the Serviceability and the Availability of IMS-Based Multimedia Services: Avoiding Core Service Failures" (The Second International Conference on Next Generation Mobile Applications, Services and Technologies, IEEE Piscataway, NJ USA 2008), cette procédure de "*Retry-After*" présente l'inconvénient que c'est le serveur surchargé lui-même qui fait connaître son état de surcharge aux clients concernés, ce qui ne fait qu'aggraver cet état de surcharge.

La présente invention concerne donc un procédé de régulation du trafic dans un réseau de télécommunications, tel que défini dans la revendication 1.

Ainsi, selon l'invention, passé un certain débit de requêtes d'enregistrement reçues postérieurement à la détection de la panne, les requêtes excédentaires sont refusées, et les terminaux ayant envoyé ces requêtes refusées se voient prescrire une certaine période de temporisation. Cela permet au noeud/lien ayant subi une panne de ne pas être saturé lors de son redémarrage, et donc un retour progressif à un trafic normal.

On notera que, contrairement à l'enseignement du document PCT 2007/130922 décrit succinctement ci-dessus, dans lequel le seuil d'écrêtage associé aux requêtes d'enregistrement est progressivement relevé pendant le redémarrage, le seuil d'écrêtage associé aux requêtes d'enregistrement a, selon la présente invention, une valeur *prédéterminée.* Ce seuil d'écrêtage sera de préférence fixé à une valeur supérieure ou égale au débit de requêtes d'enregistrement au sein d'un trafic normal, de sorte que le procédé selon l'invention devient "transparent" après retour à la normale -- jusqu'à ce qu'une nouvelle panne se produise dans le réseau de télécommunications.

Il importe de noter que la durée de la période de temporisation selon l'invention est déterminée *dynamiquement* par les noeuds du réseau en fonction de la nature exacte de la panne (par exemple en fonction de la localisation de la panne dans le réseau, ou du débit de requêtes affecté). Par contraste, selon l'art antérieur, la durée de la période de temporisation appliquée par les terminaux est toujours déterminée selon des critères standard *a priori,* c'est-à-dire dans l'ignorance de la nature exacte d'une future panne dans le réseau.

Grâce à l'invention, on peut ajuster la durée de temporisation de manière beaucoup plus fine que selon l'art antérieur, comme expliqué en détail ci-dessous.

Selon des caractéristiques particulières, le réseau envoie aux usagers dont une requête d'enregistrement a été transmise à un noeud/lien encore en panne, une réponse enjoignant à ces usagers d'observer une période de temporisation, ladite réponse précisant la durée recommandée pour cette période de temporisation.

En effet, les requêtes d'enregistrement transmises selon l'invention par un noeud donné à un noeud/lien en aval ayant subi une panne échouent bien évidemment si ce noeud/lien en aval est encore en panne. Grâce à ces dispositions, on peut ajuster la durée de temporisation également pour les terminaux ayant émis de telles requêtes.

Selon d'autres caractéristiques particulières :
- les noeuds situés immédiatement en amont dudit noeud/lien ayant subi la panne transmettent à celui-ci les requêtes de souscription d'un type prédéterminé (tel que notification de dépôt de message, ou notification de présence, ou autre) issues des usagers du réseau dans la mesure où le débit de ces requêtes est inférieur à un seuil d'écrêtage prédéterminé associé aux requêtes de ce type de souscription,
- si le débit de requêtes de souscription dudit type prédéterminé dépasse ledit seuil d'écrêtage, les requêtes excédentaires ne sont pas transmises au noeud/lien ayant subi la panne, et le réseau envoie aux usagers ayant émis une requête ainsi refusée une réponse enjoignant à ces usagers d'observer une période de temporisation, ladite réponse précisant la durée recommandée pour cette période de temporisation.

Selon des caractéristiques encore plus particulières, le réseau envoie aux usagers dont une requête de souscription dudit type a été transmise à un noeud/lien encore en panne, une réponse enjoignant à ces usagers d'observer une période de temporisation, ladite réponse précisant la durée recommandée pour cette période de temporisation.

Grâce à ces dispositions, on peut également espacer les requêtes de souscription, de manière à éviter la congestion du réseau. On obtient ainsi, globalement, une réduction sensible des durées d'attente imposées aux usagers pour pouvoir s'enregistrer suite à une panne du réseau.

Selon encore d'autres caractéristiques particulières, les seuils d'écrêtage respectifs pour l'enregistrement et les éventuels types de souscription sont choisis en fonction de priorités respectives, et de manière à ce que le débit total de requêtes transmises résultant de ce choix ne dépasse pas la capacité de traitement globale dudit noeud/lien ayant subi la panne en termes de requêtes d'enregistrement et de souscription lors d'un redémarrage, c'est-à-dire le débit maximum de requêtes d'enregistrement et de souscription que ce noeud/lien est capable de traiter au sein d'un trafic de signalisation caractéristique des premiers instants après la fin de la panne. On notera en effet que le trafic de signalisation possède une composition qui évolue en fonction de la durée de panne et qui est différente du trafic normal (messages d'appel, de notification, de rafraîchissement d'enregistrement, et ainsi de suite) : plus la durée de panne est longue et plus la composition du trafic de redémarrage diffère de celle du trafic normal, car elle comprend de plus en plus de requêtes d'enregistrement initial et de souscription initiale ; en conséquence, la capacité de traitement d'un noeud/lien pour du trafic de redémarrage doit être distinguée de la capacité de traitement du même noeud/lien pour du trafic en fonctionnement normal.

Grâce à ces dispositions, la durée d'attente subie par les usagers avant que leur enregistrement initial ne réussisse n'est affectée par le trafic de requêtes de souscription que dans une mesure ajustable par l'opérateur du réseau via le réglage des seuils d'écrêtage respectifs.

Selon encore d'autres caractéristiques particulières, le réseau a mesuré la durée de la panne, et la durée recommandée respective pour les requêtes d'enregistrement ou pour les requêtes de souscription d'un type prédéterminé est une fonction croissante de ladite durée de la panne, jusqu'à atteindre une borne supérieure respective prédéterminée.

Grâce à ces dispositions, il devient possible de recommander aux terminaux dont la requête a échoué (suite à sa non-transmission ou à l'incapacité du noeud en panne de la traiter) une période de temporisation dont la durée dépend de la durée exacte de la panne. On notera que dans l'art antérieur un terminal connecté au réseau constate qu'un noeud ou lien a subi une panne seulement lorsqu'il envoie à ce noeud/lien une requête de rafraîchissement d'enregistrement ou de souscription (qui reste donc sans réponse) ; l'usager sait que la panne est intervenue postérieurement au dernier rafraîchissement ayant réussi, mais il ne peut pas savoir exactement quand ; par conséquent, la durée d'attente programmée dans le terminal peut, éventuellement, être fixée en proportion d'une période de rafraîchissement (habituellement de l'ordre d'une heure), mais il est impossible de déterminer cette durée d'attente en fonction de la durée exacte de la panne. En revanche, les dispositions ci-dessus permettent d'en tenir compte avec une précision qui n'est limitée que par le temps (généralement court) de détection d'une panne dans le réseau. Par comparaison avec l'art antérieur, on obtient ainsi une réduction sensible des durées d'attente des terminaux, du moins tant que la durée de la panne est faible par rapport aux périodes de rafraîchissement.

Corrélativement, l'invention concerne un système de régulation du trafic dans un réseau de télécommunications tel que défini dans dans la revendication 8.

Selon des caractéristiques particulières, ledit système de régulation du trafic possède des moyens pour envoyer aux usagers dont une requête d'enregistrement a été transmise à un noeud/lien encore en panne, une réponse enjoignant à ces usagers d'observer une période de temporisation, ladite réponse précisant la durée recommandée pour cette période de temporisation.

Selon d'autres caractéristiques particulières, ledit système de régulation du trafic possède des moyens pour :
- faire transmettre audit noeud/lien ayant subi la panne par les noeuds situés immédiatement en amont les requêtes de souscription d'un type prédéterminé issues des usagers du réseau dans la mesure où le débit de ces requêtes est inférieur à un seuil d'écrêtage prédéterminé associé aux requêtes de ce type de souscription,
- si le débit de requêtes de souscription dudit type prédéterminé dépasse ledit seuil d'écrêtage, empêcher la transmission des requêtes excédentaires au noeud/lien ayant subi la panne, et faire envoyer par le réseau aux usagers ayant émis une requête ainsi refusée une réponse enjoignant à ces usagers d'observer une période de temporisation, ladite réponse précisant la durée recommandée pour cette période de temporisation.

Selon des caractéristiques encore plus particulières, ledit système de régulation du trafic possède des moyens pour envoyer aux usagers dont une requête de souscription dudit type a été transmise à un noeud/lien encore en panne, une réponse enjoignant à ces usagers d'observer une période de temporisation, ladite réponse précisant la durée recommandée pour cette période de temporisation.

Selon encore d'autres caractéristiques particulières, les seuils d'écrêtage respectifs pour l'enregistrement et les éventuels types de souscription sont choisis en fonction de priorités respectives, et de manière à ce que le débit total de requêtes transmises résultant de ce choix ne dépasse pas la capacité de traitement globale dudit noeud/lien ayant subi la panne en termes de requêtes d'enregistrement et de souscription lors d'un redémarrage.

Selon encore d'autres caractéristiques particulières, ledit système de régulation du trafic possède des moyens pour mesurer la durée de la panne, et ladite durée recommandée respective pour les requêtes d'enregistrement ou pour les requêtes de souscription d'un type prédéterminé est une fonction croissante de ladite durée de la panne, jusqu'à atteindre une borne supérieure respective prédéterminée.

Les avantages offerts par ce système de régulation du trafic sont essentiellement les mêmes que ceux offerts par les procédés corrélatifs succinctement exposés ci-dessus.

On notera qu'il est possible de réaliser le système de régulation du trafic succinctement décrit ci-dessus dans le contexte d'instructions logicielles et/ou dans le contexte de circuits électroniques.

L'invention vise également un noeud de réseau de télécommunications, par exemple un ordinateur-serveur, faisant partie d'un système de régulation du trafic tel que décrit succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de régulation du trafic succinctement exposés ci-dessus, lorsqu'il est exécuté sur un ordinateur.

Les avantages offerts par ce noeud et par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère à la figure qui l'accompagne, laquelle représente schématiquement un système pour la fourniture de services multimédia apte à mettre en oeuvre l'invention.

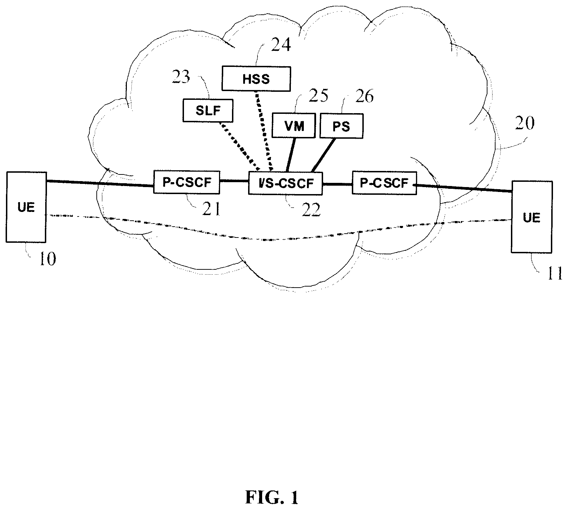

Le système illustré sur la figure 1 est fondé sur une architecture de réseau de type IMS, présenté ci-dessus. Les services multimédia offerts par un tel système peuvent comprendre des services de téléphonie, de vidéo-téléphonie, de partage de contenu ("*content-sharing"* en anglais), de présence, de messagerie instantanée, ou de télévision. Ces services sont à la disposition de l'utilisateur d'un terminal UE (pour *"User Equipmen*" en anglais) 10 sur un réseau 20 comprenant une infrastructure de transport IP et des serveurs IMS à travers lesquels le terminal 10 peut échanger des messages de signalisation SIP et des flux multimédias notamment avec un autre terminal UE 11, les terminaux 10 et 11 s'étant au préalable enregistrés auprès des serveurs IMS du réseau 20.

Les terminaux 10 et 11 sont des terminaux fixes ou mobiles disposant de moyens de signalisation SIP et pouvant comprendre des moyens de restitution d'un contenu audiovisuel.

Comme le montre la figure 1, ce système de fourniture de services s'appuie sur un réseau 20 conforme à l'architecture IMS définie au 3GPP, et qui comprend :
- une infrastructure de transport IP (non représentée) ;
- un ou plusieurs serveurs de routage I/S-CSCF (pour la combinaison d'une fonction *"Interrogating-Call Server Control Function"* et d'une fonction "*Serving-Call Server Control Function"* dans le même serveur) ; un serveur de routage I/S-CSCF 22 gère notamment la procédure d'enregistrement du terminal 10 dans le réseau 20, le routage de la signalisation entre le terminal 10 et les serveurs d'applications de messagerie vocale VM 25 et de présence PS 26 hébergeant les services souscrits par l'utilisateur du terminal 10, ainsi que le routage en direction d'autres terminaux gérés par le même réseau IMS (comme par exemple le terminal 11) et le routage de la signalisation entre ce réseau IMS 20 et d'autres réseaux (non-représentés) ;
- un ou plusieurs serveurs mandataires P-CSCF (pour "*Proxy-Call Server Control Function*") ; un serveur mandataire P-CSCF 21 est le point de contact SIP du terminal 10 dans le réseau IMS ; ainsi, toute la signalisation SIP échangée entre le terminal 10 et le serveur de routage I/S-CSCF 22 gérant le terminal 10 passe par ce serveur mandataire P-CSCF 21 ;
- un ou plusieurs serveurs de base de données, de type HSS (pour *"Home Subscriber Server"*) ; un serveur HSS 24 contient le profil de l'utilisateur du terminal 10 en termes de données d'authentification, de localisation et de services souscrits ;
- optionnellement, un serveur de type SLF (pour "*Subscriber Location Function*") ; un serveur SLF 23 est utilisé dans les réseaux contenant plusieurs serveurs HSS ; ce serveur SLF 23 est interrogé par les fonctions I-CSCF et S-CSCF pour trouver l'adresse du serveur HSS 24 hébergeant les données de l'utilisateur du terminal 10 ;
- un ou plusieurs serveurs d'application de messagerie vocale VM ; un serveur VM 25 gère la messagerie vocale de l'utilisateur du terminal 10 ; en particulier, le serveur VM 25 gère la souscription du terminal 10 aux événements de dépôt/consultation des messages de l'utilisateur de ce terminal, et notifie le terminal 10 lors de l'occurrence de ces événements ; et
- un ou plusieurs serveurs d'application de présence PS ; un serveur PS 26 gère notamment la souscription du terminal 10 aux événements de présence que l'utilisateur de ce terminal souhaite surveiller, et notifie le terminal lors de l'occurrence de ces événements.

Le serveur de base de données HSS 24 est notamment interrogé :
- par la fonction I-CSCF lors de l'enregistrement du terminal 10 afin d'allouer un serveur I/S-CSCF 22 à l'utilisateur de ce terminal ou de retrouver le serveur I/S-CSCF 22 déjà alloué à cet utilisateur ;
- par la fonction S-CSCF lors de l'enregistrement initial de l'utilisateur du terminal 10 afin de télécharger les données concernant les services souscrits par cet utilisateur, dont notamment les points de détection qui permettront au serveur I/S-CSCF 22 de déterminer quel message de signalisation il doit acheminer vers quel serveur d'application (comme par exemple VM 25 et PS 26) ;
- par la fonction S-CSCF lors des enregistrements de l'utilisateur du terminal 10, afin d'informer le serveur HSS 24 de l'installation ou de la prolongation d'un enregistrement de cet utilisateur sur le serveur I/S-CSCF 22 ; et
- par la fonction S-CSCF, afin de récupérer les informations nécessaires à l'authentification de la signalisation émise par l'utilisateur du terminal 10.

Le terminal 10 doit être obligatoirement enregistré dans le réseau 20 pour que l'utilisateur de ce terminal puisse utiliser les services fournis par le réseau 20 à partir de ce terminal. La procédure d'enregistrement initial du terminal 10 auprès du réseau 20 est normalement exécutée lors du démarrage du terminal (ou d'une application installée sur ce terminal) par l'utilisateur. Un enregistrement a une durée de validité qui est limitée dans le temps. En condition de fonctionnement normal, le terminal 10 doit renouveler son enregistrement automatiquement et périodiquement. Ces demandes de maintien d'enregistrement sont appelées "rafraîchissements d'enregistrement". Dans le cadre du protocole SIP, les procédures d'enregistrement utilisent une requête appelée "SIP REGISTER".

Certains services comme ceux du serveur VM 25 et du serveur PS 26 s'appuient sur la souscription du terminal 10 à des événements (par exemple de dépôt/consultation de message, ou de présence). La procédure de souscription initiale du terminal 10 auprès du réseau 20 est normalement exécutée lors du démarrage du terminal (ou d'une application installée sur ce terminal) par l'utilisateur, juste après la procédure d'enregistrement initial. Une procédure de souscription initiale est exécutée par types d'événements souscrits (par exemple, la souscription initiale aux événements de dépôt/consultation de message est effectuée indépendamment de la souscription initiale aux événements de présence). Une souscription à des événements a une durée limitée dans le temps. Cette durée peut être différente pour chaque type d'événement souscrit, et elle est également indépendante de la durée de validité d'enregistrement. En condition de fonctionnement normal, le terminal 10 doit renouveler sa ou ses souscriptions à des événements automatiquement et périodiquement. Ces demandes de maintien de souscriptions à des événements sont appelées "rafraîchissements de souscription". Dans le cadre du protocole SIP, les procédures de souscription à des événements utilisent une requête appelée "SIP SUBSCRIBE".

Différents types de panne peuvent rendre indisponibles les services fournis par le réseau 20 à l'utilisateur du terminal 10. En particulier:
- les pannes de type "A" ayant pour conséquence une perte des données associées à l'enregistrement du terminal 10 au niveau du serveur P-CSCF 21 ou du serveur I/S-CSCF 22 ou du serveur HSS 24 ;
- les pannes de type "B" ayant pour conséquence le blocage de la transmission de la signalisation entre le terminal 10 et le serveur P-CSCF 21, ou entre le serveur P-CSCF 21 et le serveur I/S-CSCF 22, ou entre le serveur I/S-CSCF 22 et le serveur SLF 23, ou entre le serveur I/S-CSCF 22 et le serveur HSS 24 (il s'agit essentiellement de l'infrastructure de transport IP du réseau 20).

Pour les pannes de type "A" aussi bien que les pannes de type "B", un terminal 10 va tenter de rafraîchir son enregistrement pendant la panne si la durée de cette panne est supérieure ou égale à la périodicité de rafraîchissement d'enregistrement du terminal 10 ; de plus, pour les durées de pannes plus courtes que la période de rafraîchissement d'enregistrement, la probabilité qu'un terminal tente de rafraîchir son enregistrement pendant la panne est donnée par la durée de la panne divisée par la période de rafraîchissement d'enregistrement (on fait l'hypothèse d'une répartition régulière des terminaux dans la période de rafraîchissement d'enregistrement). Dans ce cas, dans les systèmes de télécommunications connus :
- soit le terminal reçoit une réponse d'échec du réseau ;
- soit le terminal ne reçoit aucune réponse dans un temps imparti (32 secondes selon le standard IETF RFC3261), et il en déduit que le rafraîchissement d'enregistrement n'a pas réussi.

Dans les cas précités, ainsi que dans le cas d'un échec d'enregistrement initial causé par une panne de réseau, le terminal 10 va retenter de s'enregistrer auprès du réseau 20 jusqu'à ce qu'un enregistrement réussisse. Pour ce faire, le terminal 10 met classiquement en oeuvre un algorithme prescrivant une période de temporisation que le terminal doit observer avant de tenter à nouveau de s'enregistrer, cette période de temporisation ayant une durée inférieure ou égale à la période de rafraîchissement d'enregistrement.

On comprendra que, pour une durée de panne donnée, l'importance du trafic de signalisation qu'un noeud réseau affecté par la panne doit traiter au moment où la panne est réparée est une fonction décroissante de ladite période de temporisation.

On comprendra par ailleurs que, toujours pour une durée de panne donnée, la durée pendant laquelle le terminal 10 devra attendre après la fin de la panne avant d'être à nouveau enregistré est, en moyenne, une fonction croissante de la période de temporisation. En disant "en moyenne", on se réfère au fait que, pour un terminal donné, la durée pendant laquelle ce terminal doit, suite à une panne du réseau, attendre avant d'être à nouveau enregistré dépend de la période de temporisation, mais aussi du moment à partir duquel il tente de s'enregistrer par rapport à la fin de la panne. En effet, si par chance il tente de s'enregistrer juste après la fin de la panne, à supposer que le réseau ne soit pas surchargé, il va réussir à s'enregistrer quasiment à coup sûr ; si en revanche, il tente de s'enregistrer juste avant la fin de la panne, il va attendre toute la période de temporisation avant de tenter à nouveau de s'enregistrer.

Comme déjà mentionné ci-dessus, les algorithmes connus mis en oeuvre dans les terminaux après un échec d'enregistrement présentent les inconvénients suivants.

Lorsque l'opérateur du réseau 20 n'a pas la maîtrise de ces algorithmes (par exemple dans le cas de terminaux achetés par les utilisateurs "sur étagère", ou dans le cas de terminaux dont les mises-à-jour logicielles ne sont pas contrôlées par l'opérateur), l'opérateur n'est pas en mesure d'optimiser le dimensionnement des noeuds de son réseau, et il ne peut pas s'engager sur le niveau de disponibilité des services rendus par le réseau 20 à ses utilisateurs.

Un deuxième inconvénient est que la localisation de la panne n'est pas prise en compte dans ces algorithmes connus, alors qu'elle a une influence importante sur le trafic de signalisation admissible par le réseau 20. En effet, habituellement, la capacité de traitement de requêtes d'enregistrement (en particulier, de requêtes d'enregistrement initial) par utilisateur géré est plus importante sur le serveur P-CSCF 21 que sur le serveur I/S-CSCF 22, et plus importante sur le serveur I/S-CSCF 22 que sur le HSS 24 ; ainsi par exemple pour une panne affectant le serveur I/S-CSCF 22, il est possible d'admettre un trafic plus important que pour une panne affectant le serveur HSS 24. Par ailleurs, les différents noeuds de même type (i.e. de type P-CSCF, ou de type I/S-CSCF, ou de type SLF, ou de type HSS) d'un réseau 20 ne gèrent pas nécessairement tous le même nombre d'utilisateurs car cela dépend de la technique et de la politique de répartition de charge entre les différents noeuds ; ainsi, si le nombre d'utilisateurs rattaché à un noeud affecté par une panne est bas, il est possible d'admettre pour ce noeud un trafic de signalisation par terminal plus important que si le nombre d'utilisateurs rattaché à ce noeud est élevé.

Un troisième inconvénient, enfin, est qu'il n'est prévu aucun moyen pour dissocier l'émission par les terminaux d'une requête "SIP REGISTER" initiale de l'émission d'une requête "SIP SUBSCRIBE" initiale (habituellement consécutive à une requête "SIP REGISTER" initiale), y compris lorsque cette requête "SIP REGISTER" initiale fait suite à plusieurs tentatives d'enregistrement infructueuses.

La présente invention remédie aux inconvénients mentionnés ci-dessus. Selon le présent mode de réalisation de l'invention, le noeud situé sur le trajet des requêtes d'enregistrement SIP en amont du noeud en panne (i.e. par exemple le serveur P-CSCF 21 si le serveur I/S-CSCF 22 est vu comme étant en panne ; le serveur I/S-CSCF 22 si le serveur HSS 24 est vu comme étant en panne) "pilote" l'espacement des requêtes d'enregistrement et de souscription émises vers le noeud en panne en fonction :
- de la durée de la panne observée par ledit noeud situé en amont,
- du débit de trafic de redémarrage acheminé par le noeud amont vers le noeud en panne, compte des éventuels autres noeuds amont raccordés au noeud en panne et du pourcentage de trafic vers ce noeud en panne alloué à chaque noeud amont, et
- du type de trafic de redémarrage, de manière à piloter différemment le redémarrage du trafic d'enregistrement initial et le redémarrage du trafic de souscription initiale.

On notera qu'il existe dans l'état de l'art divers moyens pour permettre à un noeud de détecter la panne d'un autre noeud du réseau. De tels moyens peuvent par exemple s'appuyer sur la détection de l'absence de réception de messages de signalisation pendant une certaine période de temps entre les deux noeuds. Pour effectuer une telle détection, il est notamment possible de s'appuyer sur les messages de signalisation envoyés par les terminaux et normalement relayés par les noeuds, ou sur l'émission de messages de signalisation échangés uniquement entre deux noeuds, ou encore sur une combinaison de ces deux méthodes. La détection de la fin de la panne s'appuie quant à elle sur la réception de messages de signalisation provenant du noeud précédemment considéré en panne.

Selon le présent mode de réalisation de l'invention, lorsqu'un noeud "amont" détecte qu'un noeud situé juste après lui en aval est en panne, le noeud amont "écrête" les requêtes à destination du noeud "aval" (c'est-à-dire ne transmet *pas* les requêtes excédentaires).

Considérons par exemple une panne d'un serveur I/S-CSCF raccordé à 5 serveurs P-CSCF, avec un trafic à destination du serveur I/S-CSCF équiréparti entre les 5 serveurs P-CSCF ; supposons en outre que la capacité de traitement du serveur I/S-CSCF en termes de requêtes lors d'un redémarrage soit de 8 requêtes par seconde : dans ces conditions, le seuil d'écrêtage pour chaque serveur P-CSCF devra au maximum être égal à 8/5 requêtes par seconde.

Pour mettre en oeuvre l'écrêtage en soi, on pourra utiliser tout moyen, logiciel ("*software*") et/ou matériel ("*hardware*"), connu de l'homme du métier.

Par ailleurs, en ce qui concerne les requêtes d'enregistrement et les divers types de souscription disponibles (ou optionnellement de plusieurs types agrégés), ledit noeud amont écrête le débit de ces requêtes à destination du noeud/lien aval conformément à des seuils d'écrêtage respectivement associés à ces requêtes. Ces seuils d'écrêtage sont choisis en fonction de la priorité respective accordée par l'opérateur du réseau de télécommunications à ces types de requêtes d'enregistrement ou de souscription. Autrement dit, plus le type de requête est considéré comme important pour la qualité de service, et plus le seuil d'écrêtage correspondant sera choisi haut de manière à favoriser le traitement des requêtes de ce type par le noeud/lien ayant subi la panne dès son redémarrage ; il va de soi que, vu la capacité de traitement globale limitée dudit noeud/lien, favoriser un type de requête se fait nécessairement au détriment des autres types de requêtes. A la limite, on pourra même choisir de ne transmettre que des requêtes d'enregistrement.

On peut alors distinguer deux cas.

Le premier cas concerne les requêtes non-écrêtées et transmises alors que le noeud/lien aval précédemment en panne a redémarré : ces requêtes suivent tout simplement leur cours normal.

Le deuxième cas concerne, d'une part, les requêtes non-écrêtées, mais transmises alors que le noeud aval est encore en panne, et d'autre part les requêtes écrêtées : ces requêtes déclenchent, de la part du noeud amont, une réponse demandant au terminal émetteur de resoumettre la requête après une certaine période de temporisation. Plus précisément, dans les cas des requêtes non-écrêtées, cette réponse est envoyée, de préférence, légèrement avant l'expiration d'une période de durée égale à la période au bout de laquelle les terminaux constatent qu'une requête a échoué (32 secondes selon le standard IETF RFC3261) ; dans les cas des requêtes écrêtées, la réponse est, de préférence, envoyée immédiatement.

La durée prescrite pour cette période de temporisation dépend généralement du type de requête respectif. De préférence, cette durée augmente avec la durée de la panne, mais elle est bornée supérieurement par la période de rafraîchissement respective, c'est-à-dire la période de rafraîchissement d'enregistrement ou la période de rafraîchissement pour le type de souscription considéré. Si par exemple la période de rafraîchissement correspondant à un certain type de requête est de 1800 secondes, la durée de la période de temporisation pourra être égale à la plus petite des deux valeurs :
- 1800 secondes, et
- pente × durée de la panne,
où la "pente" est une valeur choisie permettant d'étaler plus ou moins l'envoi des requêtes par les terminaux.

La mise en oeuvre de l'invention au sein des noeuds du réseau de télécommunications (plus précisément, les serveurs P-CSCF et I/S-CSCF dans l'exemple de réalisation décrit ci-dessus) peut être réalisée au moyen de composants logiciels et/ou matériels. Par exemple, le composant utilisé pour l'écrêtage peut consister en une carte réseau dédiée, selon l'état de l'art.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de régulation du trafic selon l'invention.

En effet, l'invention vise aussi un programme d'ordinateur téléchargeable depuis un réseau de communication comprenant des instructions pour l'exécution des étapes d'un procédé de régulation du trafic selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disc"* en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de régulation du trafic selon l'invention.

## Revendications

1. Procédé de régulation du trafic dans un réseau de télécommunications, comprenant une première étape de détection d'une panne affectant un noeud ou un lien dudit réseau (20), **caractérisé en ce que** l'on met alors en oeuvre la deuxième étape suivante :
- les noeuds immédiatement adjacents audit noeud/lien ayant subi la panne, situés entre le noeud/lien ayant subi la panne et les usagers (10, 11) du réseau (20), transmettent au noeud/lien ayant subi la panne les requêtes d'enregistrement issues des usagers (10, 11) du réseau (20) dans la mesure où le débit de ces requêtes d'enregistrement est inférieur à un seuil d'écrêtage prédéterminé, fixé par l'opérateur du réseau (20) et associé aux requêtes d'enregistrement,
- si le débit de requêtes d'enregistrement dépasse ledit seuil d'écrêtage, les noeuds immédiatement adjacents audit noeud/lien ayant subi la panne, situés entre le noeud/lien ayant subi la panne et les usagers (10, 11) du réseau (20), ne transmettent pas les requêtes excédentaires au noeud/lien ayant subi la panne, et envoient aux usagers (10, 11) ayant émis une requête ainsi refusée une réponse enjoignant à ces usagers (10, 11) d'observer une période de temporisation avant de tenter à nouveau de s'enregistrer, ladite réponse précisant la durée recommandée pour cette période de temporisation.

2. Procédé de régulation du trafic selon la revendication 1, **caractérisé en ce que** les noeuds immédiatement adjacents audit noeud/lien ayant subi la panne, situés entre le noeud/lien ayant subi la panne et les usagers (10, 11) du réseau (20), envoient aux usagers (10, 11) dont une requête d'enregistrement a été transmise à un noeud/lien encore en panne une réponse enjoignant à ces usagers (10, 11) d'observer une période de temporisation, ladite réponse précisant la durée recommandée pour cette période de temporisation.

3. Procédé de régulation du trafic selon la revendication 1 ou la revendication 2, **caractérisé en ce que** :
- les noeuds immédiatement adjacents audit noeud/lien ayant subi la panne, situés entre le noeud/lien ayant subi la panne et les usagers (10, 11) du réseau (20), transmettent au noeud/lien ayant subi la panne les requêtes de souscription d'un type prédéterminé issues des usagers (10, 11) du réseau (20) dans la mesure où le débit de ces requêtes est inférieur à un seuil d'écrêtage prédéterminé, fixé par l'opérateur du réseau (20) et associé aux requêtes de ce type de souscription,
- si le débit de requêtes de souscription dudit type prédéterminé dépasse ledit seuil d'écrêtage, les noeuds immédiatement adjacents audit noeud/lien ayant subi la panne, situés entre le noeud/lien ayant subi la panne et les usagers (10, 11) du réseau (20), ne transmettent pas les requêtes excédentaires au noeud/lien ayant subi la panne, et envoient aux usagers (10, 11) ayant émis une requête ainsi refusée une réponse enjoignant à ces usagers (10, 11) d'observer une période de temporisation, ladite réponse précisant la durée recommandée pour cette période de temporisation.

4. Procédé de régulation du trafic selon la revendication 3, **caractérisé en ce que** les noeuds immédiatement adjacents audit noeud/lien ayant subi la panne, situés entre le noeud/lien ayant subi la panne et les usagers (10, 11) du réseau (20), envoient aux usagers (10, 11) dont une requête de souscription dudit type a été transmise à un noeud/lien encore en panne une réponse enjoignant à ces usagers (10, 11) d'observer une période de temporisation, ladite réponse précisant la durée recommandée pour cette période de temporisation.

5. Procédé de régulation du trafic selon l'une quelconque des revendications 1 à 4, **caractérisé en ce que** les seuils d'écrêtage respectifs pour l'enregistrement et les éventuels types de souscription sont choisis en fonction de priorités respectives, et de manière à ce que le débit total de requêtes transmises résultant de ce choix ne dépasse pas la capacité de traitement globale dudit noeud/lien ayant subi la panne en termes de requêtes d'enregistrement et de souscription lors d'un redémarrage.

6. Procédé de régulation du trafic selon l'une quelconque des revendications 1 à 5, **caractérisé en ce que** le réseau (20) a mesuré la durée de la panne, et que la durée recommandée respective pour les requêtes d'enregistrement ou pour les requêtes de souscription d'un type prédéterminé est une fonction croissante de ladite durée de la panne, jusqu'à atteindre une borne supérieure respective prédéterminée.

7. Procédé de régulation du trafic selon la revendication 6, **caractérisé en ce que** ladite borne supérieure respective est égale à la période de rafraîchissement respective.

8. Système de régulation du trafic dans un réseau de télécommunications, possédant des moyens pour, suite à la détection d'une panne affectant un noeud ou un lien dudit réseau (20) :
- faire transmettre audit noeud/lien ayant subi la panne par les noeuds immédiatement adjacents audit noeud/lien ayant subi la panne, situés entre le noeud/lien ayant subi la panne et les usagers (10, 11) du réseau (20), les requêtes d'enregistrement issues des usagers (10, 11) du réseau (20) dans la mesure où le débit de ces requêtes d'enregistrement est inférieur à un seuil d'écrêtage prédéterminé, fixé par l'opérateur du réseau (20) et associé aux requêtes d'enregistrement,
- si le débit de requêtes d'enregistrement dépasse ledit seuil d'écrêtage, empêcher la transmission des requêtes excédentaires au noeud/lien ayant subi la panne, et faire envoyer aux usagers (10, 11) ayant émis une requête ainsi refusée, par les noeuds immédiatement adjacents audit noeud/lien ayant subi la panne, situés entre le noeud/lien ayant subi la panne et les usagers (10, 11) du réseau (20), une réponse enjoignant à ces usagers (10, 11) d'observer une période de temporisation avant de tenter à nouveau de s'enregistrer, ladite réponse précisant la durée recommandée pour cette période de temporisation.

9. Système de régulation du trafic selon la revendication 8 comprenant en outre au moins un terminal usager ayant émis une dite requête refusée et apte à recevoir d'un dit noeud immédiatement adjacent audit noeud/lien ayant subi la panne une dite réponse l'enjoignant d'observer une période de temporisation avant de tenter à nouveau de s'enregistrer, ladite réponse précisant la durée recommandée pour cette période de temporisation.

10. Système de régulation du trafic selon la revendication 8 ou 9, **caractérisé en ce qu'**il possède des moyens pour envoyer aux usagers (10, 11) dont une requête d'enregistrement a été transmise à un noeud/lien encore en panne, une réponse enjoignant à ces usagers (10, 11) d'observer une période de temporisation, ladite réponse précisant la durée recommandée pour cette période de temporisation.

11. Système de régulation du trafic selon l'une quelconque des revendications 8 à 10, possédant des moyens pour :
- faire transmettre audit noeud/lien ayant subi la panne par les noeuds immédiatement adjacents audit noeud/lien ayant subi la panne, situés entre le noeud/lien ayant subi la panne et les usagers (10, 11) du réseau (20), les requêtes de souscription d'un type prédéterminé issues des usagers (10, 11) du réseau (20) dans la mesure où le débit de ces requêtes est inférieur à un seuil d'écrêtage prédéterminé, fixé par l'opérateur du réseau (20) et associé aux requêtes de ce type de souscription,
- si le débit de requêtes de souscription dudit type prédéterminé dépasse ledit seuil d'écrêtage, empêcher la transmission des requêtes excédentaires au noeud/lien ayant subi la panne, et faire envoyer aux usagers (10, 11) ayant émis une requête ainsi refusée, par les noeuds immédiatement adjacents audit noeud/lien ayant subi la panne, situés entre le noeud/lien ayant subi la panne et les usagers (10, 11) du réseau (20), une réponse enjoignant à ces usagers (10, 11) d'observer une période de temporisation, ladite réponse précisant la durée recommandée pour cette période de temporisation.

12. Système de régulation du trafic selon la revendication 11, **caractérisé en ce qu'**il possède des moyens pour envoyer aux usagers (10, 11) dont une requête de souscription dudit type a été transmise à un noeud/lien encore en panne, une réponse enjoignant à ces usagers (10, 11) d'observer une période de temporisation, ladite réponse précisant la durée recommandée pour cette période de temporisation.

13. Système de régulation du trafic selon l'une quelconque des revendications 8 à 12, **caractérisé en ce que** les seuils d'écrêtage respectifs pour l'enregistrement et les éventuels types de souscription sont choisis en fonction de priorités respectives, et de manière à ce que le débit total de requêtes transmises résultant de ce choix ne dépasse pas la capacité de traitement globale dudit noeud/lien ayant subi la panne en termes de requêtes d'enregistrement et de souscription lors d'un redémarrage.

14. Système de régulation du trafic selon l'une quelconque des revendications 8 à 13, **caractérisé en ce qu'**il possède des moyens pour mesurer la durée de la panne, et **en ce que** ladite durée recommandée respective pour les requêtes d'enregistrement ou pour les requêtes de souscription d'un type prédéterminé est une fonction croissante de ladite durée de la panne, jusqu'à atteindre une borne supérieure respective prédéterminée.

15. Système de régulation du trafic selon la revendication 14 **caractérisé en ce que** ladite borne supérieure respective est égale à la période de rafraîchissement respective.

16. Noeud d'un réseau de télécommunications, faisant partie d'un système de régulation de trafic selon l'une quelconque des revendications 8 à 15, comme noeud immédiatement adjacent audit noeud/lieu ayant subi une panne et situé entre le noeud/lien ayant subi la panne et les usagers (10,11) du réseau (20), **caractérisé en ce qu'**il comprend les moyens configurés pour: transmettre au noeud/lien ayant subi la panne les requêtes d'enregistrement issues des usagers (10,11) du réseau (20) dans la mesure où le débit de ces requêtes d'enregistrement est inférieur à un seuil d'écrêtage prédéterminé, fixé par l'opérateur du réseau (20) et associé aux requêtes d'enregistrement, si le débit de requêtes d'enregistrement dépasse ledit seuil d'écrêtage, ne pas transmettre les requêtes excédentaires au noeud/lien ayant subi la panne, et envoyer aux usagers (10,11) ayant émis une requête ainsi refusée une réponse enjoignant à ces usagers (10,11) d'observer une période de temporisation avant de tenter à nouveau de s'enregistrer, ladite réponse précisant la durée recommandée pour cette période de temporisation.

17. Moyen de stockage de données inamovible, ou partiellement ou totalement amovible, comportant des instructions de code de programme informatique pour l'exécution des étapes d'un procédé de régulation du trafic selon l'une quelconque des revendications 1 à 7.

18. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de régulation du trafic selon l'une quelconque des revendications 1 à 7, lorsqu'il est exécuté sur un ordinateur.

## Patentansprüche

1. Verfahren zur Regelung des Verkehrs in einem Telekommunikationsnetzwerk, umfassend einen ersten Schritt der Erkennung eines Fehlers, der einen Knoten oder einen Verbindungspunkt des Netzwerks (20) betrifft, **dadurch gekennzeichnet, dass** nun der zweite Schritt eingesetzt wird:
- die Knoten, die unmittelbar an den fehlerhaften Knoten/ Verbindungspunkt angrenzen, die sich zwischen dem fehlerhaften Knoten/Verbindungspunkt, und den Benutzern (10, 11) des Netzwerks (20) befinden, übertragen an den fehlerhaften Knoten/Verbindungspunkt die Registrieranfragen, die von den Benutzern (10, 11) des Netzwerks (20) ausgehen, in dem Maße, als die Menge dieser Registrieranfragen geringer als ein vorbestimmter Begrenzungswert ist, der vom Betreiber des Netzwerks (20) festgelegt und den Registrieranfragen zugeordnet wird,
- wenn die Menge an Registrieranfragen den Begrenzungswert überschreitet, übertragen die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, nicht die überschüssigen Anfragen an den fehlerhaften Knoten/Verbindungspunkt und senden an die Benutzer (10, 11), die eine so verweigerte Anfrage gesandt haben, eine Antwort, die diesen Benutzern (10, 11) vorschreibt, eine Verzögerungszeit einzuhalten, bevor wieder versucht wird, sich zu registrieren, wobei die Antwort die empfohlene Dauer für diese Verzögerungszeit anführt.

2. Verfahren zur Regelung des Verkehrs nach Anspruch 1, **dadurch gekennzeichnet, dass** die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, an die Benutzer (10, 11), deren Registrieranfrage an einen noch fehlerhaften Knoten/Verbindungspunkt übertragen wurde, eine Antwort, die diesen Benutzern (10, 11) vorschreibt, eine Verzögerungszeit einzuhalten, wobei die Antwort die empfohlene Dauer für diese Verzögerungszeit anführt.

3. Verfahren zur Regelung des Verkehrs nach Anspruch 1 oder Anspruch 2, **dadurch gekennzeichnet, dass**:
- die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, an den fehlerhaften Knoten/Verbindungspunkt die Subskriptionsanfragen eines vorbestimmten Typs, die von den Benutzern (10, 11) des Netzwerks (20) ausgehen, übertragen, in dem Maße, als die Menge dieser Anfragen geringer als ein vorbestimmter Begrenzungswert ist, der vom Betreiber des Netzwerks (20) festgelegt und den Anfragen dieses Subskriptionstyps zugeordnet wurde,
- wenn die Menge an Subskriptionsanfragen des vorbestimmten Typs den Begrenzungswert überschreitet, übertragen die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, nicht die überschüssigen Anfragen an den fehlerhaften Knoten/Verbindungspunkt und senden an die Benutzer (10, 11), die eine so verweigerte Anfrage gesandt haben, eine Antwort, die diesen Benutzern (10, 11) vorschreibt, eine Verzögerungszeit einzuhalten, wobei die Antwort die empfohlene Dauer für diese Verzögerungszeit anführt.

4. Verfahren zur Regelung des Verkehrs nach Anspruch 3, **dadurch gekennzeichnet, dass** die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, an die Benutzer (10, 11), deren Subskriptionsanfrage des Typs an einen noch fehlerhaften Knoten/Verbindungspunkt übertragen wurde, eine Antwort, die diesen Benutzern (10, 11) vorschreibt, eine Verzögerungszeit einzuhalten, wobei die Antwort die empfohlene Dauer für diese Verzögerungszeit anführt.

5. Verfahren zur Regelung des Verkehrs nach einem der Ansprüche 1 bis 4, **dadurch gekennzeichnet, dass** die jeweiligen Begrenzungswerte für die Registrierung und die eventuellen Subskriptionstypen in Abhängigkeit von jeweiligen Prioritäten ausgewählt werden, und derart, dass die Gesamtmenge an übertragenen Anfragen, die sich aus dieser Wahl ergibt, nicht die Gesamtbearbeitungskapazität des fehlerhaften Knotens/Verbindungspunktes im Hinblick auf Registrier- und Subskriptionsanfragen bei einem Neustart überschreitet.

6. Verfahren zur Regelung des Verkehrs nach einem der Ansprüche 1 bis 5, **dadurch gekennzeichnet, dass** das Netzwerk (20) die Dauer des Fehlers gemessen hat, und dass die jeweils empfohlene Dauer für die Registrieranfragen oder für die Subskriptionsanfragen eines vorbestimmten Typs eine steigende Funktion der Dauer des Fehlers ist, bis eine vorbestimmte jeweilige obere Grenze erreicht ist.

7. Verfahren zur Regelung des Verkehrs nach Anspruch 6, **dadurch gekennzeichnet, dass** die jeweilige obere Grenze gleich der jeweiligen Aktualisierungsperiode ist.

8. System zur Regelung des Verkehrs in einem Telekommunikationsnetzwerk, umfassend Mittel, um nach der Erkennung eines Fehlers, der einen Knoten oder einen Verbindungspunkt des Netzwerks (20) betrifft:
- an den fehlerhaften Knoten/Verbindungspunkt, durch die Knoten, die unmittelbar an den fehlerhaften Knoten/ Verbindungspunkt angrenzen, die sich zwischen dem fehlerhaften Knoten/Verbindungspunkt, und den Benutzern (10, 11) des Netzwerks (20) befinden, die Registrieranfragen, die von den Benutzern (10, 11) des Netzwerks (20) ausgehen, übertragen zu lassen, in dem Maße, als die Menge dieser Registrieranfragen geringer als ein vorbestimmter Begrenzungswert ist, der vom Betreiber des Netzwerks (20) festgelegt und den Registrieranfragen zugeordnet wird,
- wenn die Menge an Registrieranfragen den Begrenzungswert überschreitet, die Übertragung der überschüssigen Anfragen an den fehlerhaften Knoten/Verbindungspunkt zu verhindern, und an die Benutzer (10, 11), die eine so verweigerte Anfrage gesandt haben, durch die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, eine Antwort senden zu lassen, die diesen Benutzern (10, 11) vorschreibt, eine Verzögerungszeit einzuhalten, bevor wieder versucht wird, sich zu registrieren, wobei die Antwort die empfohlene Dauer für diese Verzögerungszeit anführt.

9. System zur Regelung des Verkehrs nach Anspruch 8, umfassend ferner mindestens ein Benutzerendgerät, das eine verweigerte Anfrage gesandt hat und geeignet ist, von einem Knoten, der unmittelbar an den fehlerhaften Knoten/Verbindungspunkt angrenzt, eine Antwort zu erhalten, die vorschreibt, eine Verzögerungszeit einzuhalten, bevor wieder versucht wird, sich zu registrieren, wobei die Antwort die empfohlene Dauer für diese Verzögerungszeit anführt.

10. System zur Regelung des Verkehrs nach Anspruch 8 oder 9, **dadurch gekennzeichnet, dass** es Mittel besitzt, um an die Benutzer (10, 11), deren Registrieranfrage an einen noch fehlerhaften Knoten/Verbindungspunkt übertragen wurde, eine Antwort zu senden, die diesen Benutzern (10, 11) vorschreibt, eine Verzögerungszeit einzuhalten, wobei die Antwort die empfohlene Dauer für diese Verzögerungszeit anführt.

11. System zur Regelung des Verkehrs nach einem der Ansprüche 8 bis 10, umfassend Mittel, um:
- an den fehlerhaften Knoten/Verbindungspunkt, durch die Knoten, die unmittelbar an den fehlerhaften Knoten/ Verbindungspunkt angrenzen, die sich zwischen dem fehlerhaften Knoten/Verbindungspunkt, und den Benutzern (10, 11) des Netzwerks (20) befinden, die Subskriptionsanfragen eines vorbestimmten Typs, die von den Benutzern (10, 11) des Netzwerks (20) ausgehen, übertragen zu lassen, in dem Maße, als die Menge dieser Anfragen geringer als ein vorbestimmter Begrenzungswert ist, der vom Betreiber des Netzwerks (20) festgelegt und den Anfragen dieses Subskriptionstyps zugeordnet wird,
- wenn die Menge an Subskriptionsanfragen des vorbestimmten Typs den Begrenzungswert überschreitet, die Übertragung der überschüssigen Anfragen an den fehlerhaften Knoten/Verbindungspunkt zu verhindern, und an die Benutzer (10, 11), die eine so verweigerte Anfrage gesandt haben, durch die Knoten, die unmittelbar an den fehlerhaften Knoten/Verbindungspunkt angrenzen, die sich zwischen dem fehlerhaften Knoten/Verbindungspunkt und den Benutzern (10, 11) des Netzwerks (20) befinden, eine Antwort senden zu lassen, die diesen Benutzern (10, 11) vorschreibt, eine Verzögerungszeit einzuhalten, wobei die Antwort die empfohlene Dauer für diese Verzögerungszeit anführt.

12. System zur Regelung des Verkehrs nach Anspruch 11, **dadurch gekennzeichnet, dass** es Mittel besitzt, um an die Benutzer (10, 11), deren Subskriptionsanfrage des Typs an einen noch fehlerhaften Knoten/Verbindungspunkt übertragen wurde, eine Antwort zu senden, die diesen Benutzern (10, 11) vorschreibt, eine Verzögerungszeit einzuhalten, wobei die Antwort die empfohlene Dauer für diese Verzögerungszeit anführt.

13. System zur Regelung des Verkehrs nach einem der Ansprüche 8 bis 12, **dadurch gekennzeichnet, dass** die jeweiligen Begrenzungswerte für die Registrierung und die eventuellen Subskriptionstypen in Abhängigkeit von jeweiligen Prioritäten ausgewählt werden, und derart, dass die Gesamtmenge an übertragenen Anfragen, die sich aus dieser Wahl ergibt, nicht die Gesamtbearbeitungskapazität des fehlerhaften Knotens/Verbindungspunktes im Hinblick auf Registrier- und Subskriptionsanfragen bei einem Neustart überschreitet.

14. System zur Regelung des Verkehrs nach einem der Ansprüche 8 bis 13, **dadurch gekennzeichnet, dass** es Mittel umfasst, um die Dauer des Fehlers zu messen, und dass die jeweils empfohlene Dauer für die Registrieranfragen oder für die Subskriptionsanfragen eines vorbestimmten Typs eine steigende Funktion der Dauer des Fehlers ist, bis eine vorbestimmte jeweilige obere Grenze erreicht ist.

15. System zur Regelung des Verkehrs nach Anspruch 14, **dadurch gekennzeichnet, dass** die jeweilige obere Grenze gleich der jeweiligen Aktualisierungsperiode ist.

16. Knoten eines Telekommunikationsnetzwerks, der Teil eines Systems zur Regelung eines Verkehrs nach einem der Ansprüche 8 bis 15 als Knoten ist, der unmittelbar an den fehlerhaften Knoten/Verbindungspunkt angrenzt und sich zwischen dem fehlerhaften Knoten/Verbindungspunkt und den Benutzern (10, 11) des Netzwerks (20) befindet, **dadurch gekennzeichnet, dass** er Mittel umfasst, die eingerichtet sind, um: an den fehlerhaften Knoten/Verbindungspunkt die Registrieranfragen zu übertragen, die von den Benutzern (10, 11) des Netzwerks (20) ausgehen, in dem Maße, als die Menge dieser Registrieranfragen geringer als ein vorbestimmter Begrenzungswert ist, der vom Betreiber des Netzwerks (20) festgelegt und den Registrieranfragen zugeordnet wird, wenn die Menge an Registrieranfragen den Begrenzungswert überschreitet, die überschüssigen Anfragen nicht an den fehlerhaften Knoten/Verbindungspunkt zu übertragen, und an die Benutzer (10, 11), die eine so verweigerte Anfrage gesandt haben, eine Antwort zu senden, die diesen Benutzern (10, 11) vorschreibt, eine Verzögerungszeit einzuhalten, bevor wieder versucht wird, sich zu registrieren, wobei die Antwort die empfohlene Dauer für diese Verzögerungszeit anführt.

17. Nicht entfernbares oder teilweise oder zur Gänze entfernbares Datenspeichermittel, umfassend Informatikprogrammcodeanweisungen für die Ausführung der Schritte eines Verfahrens zur Regelung des Verkehrs nach einem der Ansprüche 1 bis 7.

18. Computerprogramm, das von einem Kommunikationsnetzwerk herunterladbar und/oder auf einem von einem Computer lesbaren Träger gespeichert und/oder von einem Mikroprozessor ausführbar ist, **dadurch gekennzeichnet, dass** es Anweisungen für die Ausführung der Schritte eines Verfahrens zur Regelung des Verkehrs nach einem der Ansprüche 1 bis 7 umfasst, wenn es auf einem Computer ausgeführt wird.

## Claims

1. Method for controlling traffic in a telecommunications network, comprising a first step of detecting a breakdown affecting a node or a link of said network (20), **characterized in that** the following second step is then implemented:
- the nodes immediately adjacent to said node/link that experienced the breakdown, located between the node/link that experienced the breakdown and the users (10, 11) of the network (20), transmit, to the node/link that experienced the breakdown, the registration requests originating from the users (10, 11) of the network (20) as long as the rate of these registration requests is below a predetermined clipping threshold, which is set by the operator of the network (20) and is associated with the registration requests;
- if the rate of registration requests exceeds said clipping threshold, the nodes immediately adjacent to said node/link that experienced the breakdown, located between the node/link that experienced the breakdown and the users (10, 11) of the network (20), do not transmit the surplus requests to the node/link that experienced the breakdown, and send, to the users (10, 11) having transmitted a request that is thus refused, a response instructing these users (10, 11) to observe a time delay period before re-attempting to register, said response specifying the recommended duration for this time delay period.

2. Method for controlling traffic according to Claim 1, **characterized in that** the nodes immediately adjacent to said node/link that experienced the breakdown, located between the node/link that experienced the breakdown and the users (10, 11) of the network (20), send, to the users (10, 11) for which a registration request has been transmitted to a node/link that is still broken down, a response instructing these users (10, 11) to observe a time delay period, said response specifying the recommended duration for this time delay period.

3. Method for controlling traffic according to Claim 1 or Claim 2, **characterized in that**:
- the nodes immediately adjacent to said node/link that experienced the breakdown, located between the node/link that experienced the breakdown and the users (10, 11) of the network (20), transmit, to the node/link that experienced the breakdown, the subscription requests of a predetermined type originating from the users (10, 11) of the network (20) as long as the rate of these requests is below a predetermined clipping threshold, which is set by the operator of the network (20) and is associated with the requests for this type of subscription;
- if the rate of subscription requests of said predetermined type exceeds said clipping threshold, the nodes immediately adjacent to said node/link that experienced the breakdown, located between the node/link that experienced the breakdown and the users (10, 11) of the network (20), do not transmit the surplus requests to the node/link that experienced the breakdown, and send, to the users (10, 11) that transmitted a request that is thus refused, a response instructing these users (10, 11) to observe a time delay period, said response specifying the recommended duration for this time delay period.

4. Method for controlling traffic according to Claim 3, **characterized in that** the nodes immediately adjacent to said node/link that experienced the breakdown, located between the node/link that experienced the breakdown and the users (10, 11) of the network (20), send, to the users (10, 11) for which a subscription request of said type has been transmitted to a node/link that is still broken down, a response instructing these users (10, 11) to observe a time delay period, said response specifying the recommended duration for this time delay period.

5. Method for controlling traffic according to any of Claims 1 to 4, **characterized in that** the respective clipping thresholds for the registration and any potential types of subscription are selected on the basis of respective priorities, and so that the total rate of transmitted requests resulting from this selection does not exceed the overall processing capability of said node/link that experienced the breakdown in terms of registration and subscription requests during a restart.

6. Method for controlling traffic according to any of Claims 1 to 5, **characterized in that** the network (20) has measured the duration of the breakdown, and **in that** the respective recommended duration for the registration requests or for the subscription requests of a predetermined type is an increasing function of said duration of the breakdown, until a respective predetermined upper limit is reached.

7. Method for controlling traffic according to Claim 6, **characterized in that** said respective upper limit is equal to the respective refreshment period.

8. System for controlling traffic in a telecommunications network, having means for, following the detection of a breakdown affecting a node or a link of said network (20):
- transmitting, to said node/link that experienced the breakdown, by the nodes immediately adjacent to said node/link that experienced the breakdown, located between the node/link that experienced the breakdown and the users (10, 11) of the network (20), the registration requests originating from the users (10, 11) of the network (20) as long as the rate of these registration requests is below a predetermined clipping threshold, which is set by the operator of the network (20) and is associated with the registration requests;
- if the rate of registration requests exceeds said clipping threshold, preventing the transmission of the surplus requests to the node/link that experienced the breakdown, and sending, to the users (10, 11) that transmitted a request that is thus refused, by the nodes immediately adjacent to said node/link that experienced the breakdown, located between the node/link that experienced the breakdown and the users (10, 11) of the network (20), a response instructing these users (10, 11) to observe a time delay period before re-attempting to register, said response specifying the recommended duration for this time delay period.

9. System for controlling traffic according to Claim 8, further comprising at least one user terminal that transmitted one of said refused requests and that is capable of receiving, from a node immediately adjacent to said node/link that experienced the breakdown, one of said responses instructing it to observe a time delay period before re-attempting to register, said response specifying the recommended duration for this time delay period.

10. System for controlling traffic according to Claim 8 or Claim 9, **characterized in that** it comprises means for sending, to the users (10, 11) for which a registration request has been transmitted to a node/link that is still broken down, a response instructing these users (10, 11) to observe a time delay period, said response specifying the recommended duration for this time delay period.

11. System for controlling traffic according to any of Claims 8 to 10, comprising means for:
- transmitting, to said node/link that experienced the breakdown, by the nodes immediately adjacent to said node/link that experienced the breakdown, located between the node/link that experienced the breakdown and the users (10, 11) of the network (20), the subscription requests of a predetermined type originating from the users (10, 11) of the network (20) as long as the rate of these requests is below a predetermined clipping threshold, which is set by the operator of the network (20) and is associated with the requests for this type of subscription;
- if the rate of subscription requests of said predetermined type exceeds said clipping threshold, preventing the transmission of the surplus requests to the node/link that experienced the breakdown, and sending, to the users (10, 11) that transmitted a request that is thus refused, by the nodes immediately adjacent to said node/link that experienced the breakdown, located between the node/link that experienced the breakdown and the users (10, 11) of the network (20), a response instructing these users (10, 11) to observe a time delay period, said response specifying the recommended duration for this time delay period.

12. System for controlling traffic according to Claim 11, **characterized in that** it comprises means for sending, to the users (10, 11) for which a subscription request of said type has been transmitted to a node/link that is still broken down, a response instructing these users (10, 11) to observe a time delay period, said response specifying the recommended duration for this time delay period.

13. System for controlling traffic according to any of Claims 8 to 12, **characterized in that** the respective clipping thresholds for the registration and any potential types of subscription are selected on the basis of respective priorities, and so that the total rate of transmitted requests resulting from this selection does not exceed the overall processing capability of said node/link that experienced the breakdown in terms of registration and subscription requests during a restart.

14. System for controlling traffic according to any of Claims 8 to 13, **characterized in that** it comprises means for measuring the duration of the breakdown, and **in that** said respective recommended duration for the registration requests or for the subscription requests of a predetermined type is an increasing function of said duration of the breakdown, until a respective predetermined upper limit is reached.

15. System for controlling traffic according to Claim 14, **characterized in that** said respective upper limit is equal to the respective refreshment period.

16. Node of a telecommunications network, forming part of a system for controlling traffic according to any of Claims 8 to 15, as node immediately adjacent to said node/link that experienced a breakdown and located between the node/link that experienced the breakdown and the users (10, 11) of the network (20), **characterized in that** it comprises means configured to: transmit, to the node/link that experienced the breakdown, the registration requests originating from the users (10, 11) of the network (20) as long as the rate of these registration requests is below a predetermined clipping threshold, which is set by the operator of the network (20) and is associated with the registration requests, and, if the rate of registration requests exceeds said clipping threshold, not to transmit the surplus requests to the node/link that experienced the breakdown, and to send, to the users (10, 11) that transmitted a request that is thus refused, a response instructing these users (10, 11) to observe a time delay period before re-attempting to register, said response specifying the recommended duration for this time delay period.

17. Means for storing irremovable, or partially or fully removable, data comprising computer program code instructions for executing steps of a method for controlling traffic according to any of Claims 1 to 7.

18. Computer program that can be downloaded from a communication network and/or stored on a computer-readable medium and/or executed by a microprocessor, **characterized in that** it comprises instructions for executing steps of a method for controlling traffic according to any of Claims 1 to 7, when it is executed on a computer.
